Europäisches Patentamt

(19) European Patent Office

Office européen des brevets

(11) Publication number: **0 165 584**
A2

(12) # EUROPEAN PATENT APPLICATION

(21) Application number: 85107485.6

(22) Date of filing: 18.06.85

(51) Int. Cl.⁴: **C 04 B 41/85**
F 16 C 33/04

(30) Priority: 20.06.84 JP 125112/84

(43) Date of publication of application:
27.12.85 Bulletin 85/52

(84) Designated Contracting States:
DE GB

(71) Applicant: HITACHI, LTD.
6, Kanda Surugadai 4-chome Chiyoda-ku
Tokyo 100(JP)

(72) Inventor: Hatano, Kazuyoshi
213-64, Hakari Minorimachi
Higashiibaraki-gun Ibaraki-ken(JP)

(72) Inventor: Miyata, Hiroshi
2120-4, Motoyoshidacho
Mito-shi(JP)

(72) Inventor: Ohno, Hiromitsu
6148-155, Shishikura Dejimamura
Niihari-gun Ibaraki-ken(JP)

(72) Inventor: Sugiyama, Kengo
635-30, Nedo
Abiko-shi(JP)

(72) Inventor: Sato, Mitsuyoshi
2094-29, Shimoinayoshi Chiyodamura
Niihari-gun Ibaraki-ken(JP)

(74) Representative: Finck, Dieter et al,
Patentanwälte v. Füner, Ebbinghaus, Finck Mariahilfplatz
2 & 3
D-8000 München 90(DE)

(54) Sliding contact material.

㊄ A sliding contact material comprising a porous ceramic substrate having the surface pores filled with at least one member selected from the group consisting of metals of Groups Ib and IVb of the periodic table, graphite, and boron nitride.

FIG. I

## SLIDING CONTACT MATERIAL

1 BACKGROUND OF THE INVENTION

FIELD OF THE INVENTION

This invention relates to a sliding contact material having a low-friction slide surface, more particularly to a sliding contact material suitable for use in a high temperature region.

RELATED ART STATEMENT

Various sliding contact materials have heretofore been developed for use in a low temperature region, whereas none of those having a low coefficient of friction and suitable for use in a high temperature region has been developed. U.S. Patent 4,123,122, for example, discloses a bearing element comprising a bearing substrate with a porous coating metallurgically spray-bonded thereto, such as aluminum bronze or a ceramic material, which coating is covered with a layer of an adhesive-solid lubricant formulation. Examples of solid lubricants used in the U.S. Patent are ethylene tetrafluoride ($C_2F_4$), powdered molybdenum disulfide ($MoS_2$), and powdered graphite, and examples of adhesives used are phenol resins, polyamide-imide resins, and epoxy resins. Such a sliding contact material, however, has a possibility of thermal breakdown because of the insufficient heat resistance of the adhesives. Although a heat resistant solid lubricant such as graphite is used, thermal decomposition of the slide surface of the element tends to interfere with satisfactory manifestation of the function. For the reason the element is unsuitable for use in a high temperature region exceeding 400°C, and its use is limited to a lower temperature region below 400°C.

SUMMARY OF THE INVENTION

The primary object of this invention is to provide a sliding contact material capable of maintaining low-friction characteristics in a high temperature region (400 to 800°C), as well as in a low temperature region below 400°C.

The sliding contact material of this invention comprises a porous ceramic substrate, the open pores of which in the surface (hereinafter referred to as surface pores) are filled with at least one member selected from the group consisting of metals of Groups Ib and IVb of the periodic table, graphite, and boron nitride. As a consequence, the present sliding contact material is excellent in heat resistance and maintains its coefficient of friction at a level of about 0.2 or below even in a high temperature region of 400° to 800°C and the initial coefficient of friction is always mentioned even at a high PV (load x velocity) value of 35 $kg \cdot f \cdot m/cm^2$.

BRIEF DESCRIPTION OF THE DRAWINGS

Fig. 1 is an exterior view of a fundamental model of the present sliding contact material.

Fig. 2 is an exterior view of an example of the present sliding contact material.

Fig. 3 is an illustrative view of an example of journal-bearing utilizing the present sliding contact material.

Fig. 4 is an illustrative view of another example of journal-bearing utilizing the present sliding contact material.

Fig. 5 is a diagram representing the relationship between the PV value and the coefficient of friction for an example of the present sliding contact material.

Fig. 6 is a diagram representing the relationship between the time of test and the coefficient of friction to demonstrate the durability of the present sliding contact material.

DETAILED DESCRIPTION OF PREFERRED EMBODIMENTS

The sliding contact material of this invention is manufactured by filling a lubricant into minute pores open in the surface of porous ceramics. As the lubricant, use is made of metals of Groups Ib and IVb of the periodic table of elements, graphite, or boron nitride (BN). These substances are used singly or in a combination of two or more thereof.

The metals of Group Ib and IVb preferably used in this invention include lead (Pb), copper (Cu), silver (Ag), and gold (Au). These metals, graphite, and boron nitride can be used as a compounded mixture of two or more of these substances to fill the surface pores of ceramic substrates.

As contrasted to ethylene tetrafluoride ($C_2F_4$) or molybdenum disulfide ($MoS_2$), the above-noted lubricants do not decompose when used in a so-called high temperature region of above 400°C and the ceramic sliding contact material of this invention stands long-term use under high temperature conditions without losing the function of a lubricated element.

The ceramics suitable for the substrate are preferably those having a porosity (the percentage ratio in surface areas of pores and ceramic substrate) of 10 to 95%. If the ratio is below 10%, the surface area of the pores filled with a lubricant is insufficient, resulting in an increase in coefficient of friction, whereas if it exceeds 95%, the mechanical strength of the ceramic substrate becomes insufficient.

The filling of pores with a lubricant is carried out by vapor deposition, impregnation, or injection under pressure for metals and graphite, whereas it is carried out for boron nitride by impregnation, injection under pressure, or spraying together with a volatile liquid.

In filling pores by vapor deposition, impregnation, or spraying, the lubricant may be deposited onto the entire surface in about 100 Å thick, as well as onto the pores. However, the lubricant adhered to the areas free of pores will be eliminated with the use as the sliding contact material, while the portion of the lubricant which filled the pores remains as such and contributes to the lubrication.

The reason for the reduction in coefficient of friction by the filling with the lubricant is such that the lubricant in the pores expands by the frictional heat evolved from the sliding contact and forms a thin boundary film of the lubricant.

The suitable ceramics include silicon carbide (SiC), alumina ($Al_2O_3$), and silicon nitride ($Si_3N_4$).

This invention is illustrated below with reference to the accompanying drawings.

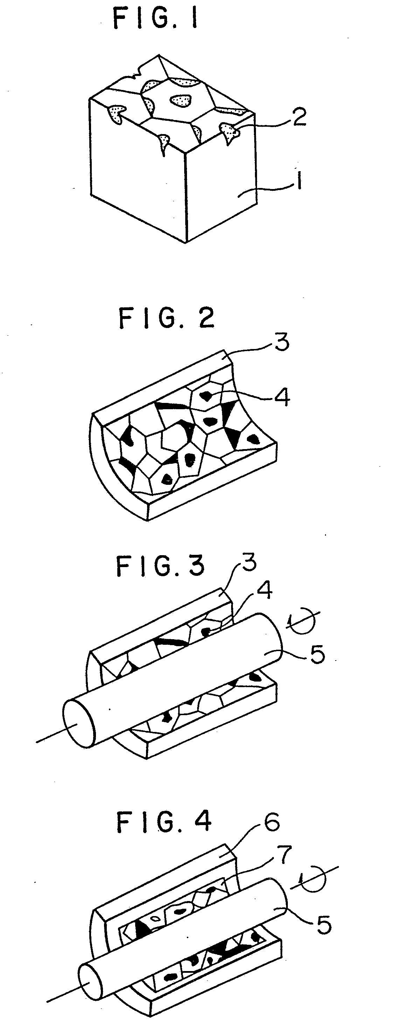

Fig. 1 is a schematic drawing of an example wherein the surface pores of a silicon carbide element 1 (sintered SiC having a porosity of 50%; the same applies hereinafter) are filled with graphite 2 by spraying.

Fig. 2 shows an example of the sliding contact material made by filling the surface pores of a silicon carbide substrate 3 with boron nitride 4 by spraying.

Fig. 3 shows an example of a journal bearing to support a rotary shaft 5, which employs the sliding contact material shown in Fig. 2.

Fig. 4 shows an example of the sliding contact material made by embedding a segment 7 of the ceramic sliding contact material, shown in Fig. 2, into a substrate 6. The substrate material 6 in this case can be a ceramic material (unfilled) or a common metal such as stainless steel.

When the sliding contact materials shown in Figs. 3 and 4 both are used in actual run, the boron nitride expands by the frictional heat (the temperature reaches about 500°C) and spreads all over the slide surface, to thereby exhibit the function of a low-friction sliding contact material excellent in heat resistance.

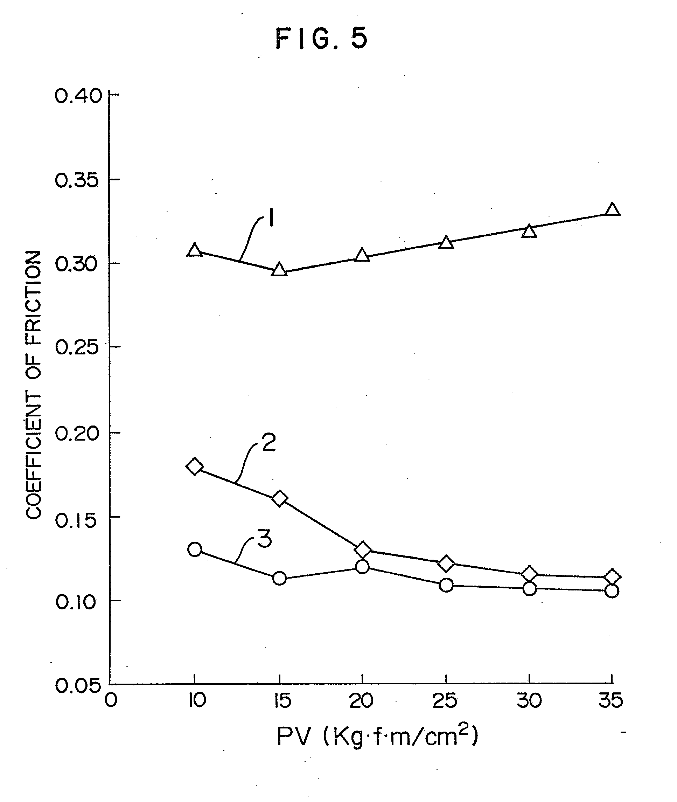

Fig. 5 is a diagram representing the relationship at ordinary temperature between the coefficient of friction and the PV value (P = load and V = velocity), when a sliding contact material is allowed to slide in contact with an aluminum alloy (0.26% Si, 0.2% Fe, 0.08% Mn, 5.2% Mg, 0.07% Cr, by weight, the balance being Al). In Fig. 5, curves 1, 2 and 3 refer to an untreated silicon carbide, a silicon carbide substrate filled with graphite, a silicon carbide substrate filled with boron nitride, respectively. As is apparent from the Figure, the untreated substrate material shows a coefficient of friction of 0.30 to 0.35, whereas the sliding contact materials according to this invention show that of 0.10 to 0.18 which decreases with the increase in PV value.

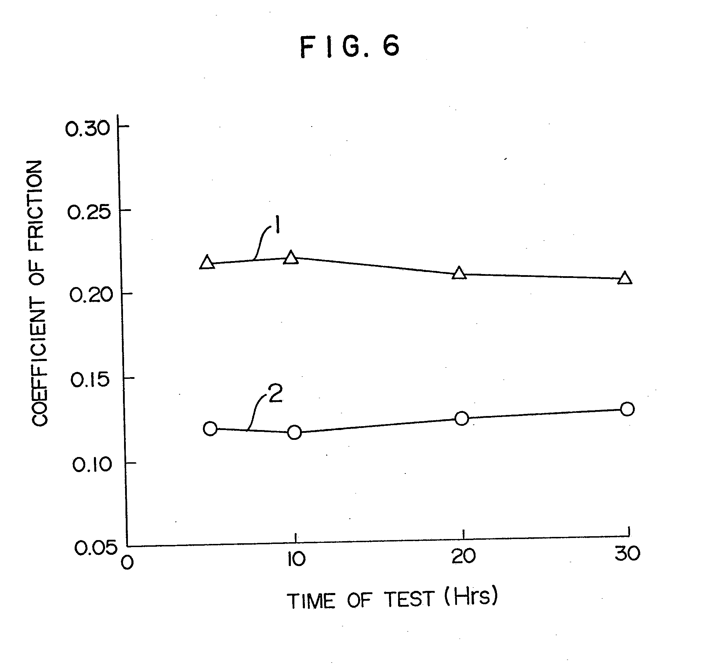

Fig. 6 is a diagram representing the relation between the coefficient of friction and the time, in hour, of test. Curve 1 refers to the case in which untreated silicon carbide substrates (50% pore ratio) are made to slide in contact with each other. Curve 2 refers to the case in which silicon carbide substrates filled with graphite are made to slide in contact with each other. As is apparent from curve 2, the sliding contact material treated according to this invention shows no increase in coefficient of friction after the continuous test run for 30 hours, said coefficient remaining at about 0.12.

A journal bearing of the same structure as that in Fig. 3 is prepared by filling the surface pores of a silicon carbide substrate with gold by vapor deposition. This journal bearing withstands the continuous use for a period of time as long as 100 hours at a high temperature of 500°C.

As is apparent from the above examples, it is possible according to this invention to obtain ceramic sliding contact materials capable of maintaining a small coefficient of friction of about 0.12 even at a high PV value of 35 $kg \cdot f \cdot m/cm^2$ or in a high temperature region of above 400°C.

Since the present sliding contact material employs no such lubricant as grease, it is suitable for use in an extremely low temperature region, in an environment where undesirable dust particles are present, under the conditions that require a maintenance-free sliding contact material, or under high vacuum.

WHAT IS CLAIMED IS:

1.      A sliding contact material comprising a porous substrate material having the surface pores filled with a lubricant, characterized in that said porous substrate material is a ceramic material and said lubricant is at least one member selected from the group consisting of metals of Groups Ib and IVb of the periodic table, graphite, and boron nitride.

2.      A sliding contact material according to Claim 1, wherein the metals of Groups Ib and IVb are lead, copper, silver, and gold.

3.      A sliding contact material according to Claim 1, wherein the ceramic material is silicon carbide, alumina, or silicon nitride.

4.      A sliding contact material according to Claim 1, wherein the porosity of the ceramic material is 10 to 95%.

EPAA-32933.9

FIG. 1

FIG. 2

FIG. 3

FIG. 4

EPAA-32933.9

# FIG. 5

0165584

EPAA-32933.9

# F I G. 6